(19)

Europäisches
Patentamt
European
Patent Office
Office européen
des brevets

(11) **EP 3 862 192 A1**

(12) **EUROPEAN PATENT APPLICATION**

(43) Date of publication:
**11.08.2021 Bulletin 2021/32**

(51) Int Cl.:
**B43K 1/00** *(2006.01)*       **C09D 11/00** *(2014.01)*
**B43K 8/06** *(2006.01)*

(21) Application number: **20155720.4**

(22) Date of filing: **05.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsubishi Pencil Company, Limited Tokyo 140-8537 (JP)**

(72) Inventors:
• **KAMIYA, Toshimi**
  **Tokyo, 140-8537 (JP)**
• **UEDA, Satoshi**
  **Tokyo, 140-8537 (JP)**
• **SHIINO, Kenichi**
  **Tokyo, 140-8537 (JP)**

(74) Representative: **Vossius & Partner Patentanwälte Rechtsanwälte mbB Siebertstrasse 3 81675 München (DE)**

Remarks:
Amended claims in accordance with Rule 137(2) EPC.

(54) **WRITING INSTRUMENT**

(57)    Provided is a writing instrument providing a pen tip with a visible part capable of visually recognising a writing direction, evenly feeding an ink to a pen wick to prevent drawn lines from causing a density difference and having an excellent writing performance.

A writing instrument characterized by feeding an ink composition for a writing instrument stored in a writing instrument body to a pen wick at a pen tip, providing the pen tip with a visible part capable of visually recognising a writing direction, having a porosity of the pen wick of 30 to 70%, wherein the ink composition for the writing instrument comprises coloured resin particles having a $D_{50}$ particle diameter of 1 to 10 $\mu$m and has an ink viscosity of 8 to 20 mPa·s, and the coloured resin particles have a particle size distribution: Mv/Mn of 1 to 3.

EP 3 862 192 A1

**Description**

Field

The present invention relates to a writing instrument providing a pen tip with a visible part capable of visually recognising a writing direction and more specifically relates to a writing instrument capable of drawing lines having no difference in intensity without unevenly feeding an ink to a pen wick.

Background

Pen tips of writing instruments called a paint maker, an underline marker and the like have so far been provided with broad leads to thereby make it possible to draw broad lines and are excellent in visibility of marking and workability, so that the writing instruments are used in a wide range.

In pen tips of writing instruments such as a line marker, materials prepared by converging synthetic resin fibres in a bar-like shape and porous members such as sintered bodies of polymers are provided with a capillary function, and this function makes it possible to derive an ink fed from a barrel constituting a writing instrument body to a pen tip to thereby make writing possible.

Further, as writing instruments storing a fluorescent ink in a barrel constituting a writing instrument body are spread commercially, a lot of writing instruments having structures and shapes which make it possible to draw broad lines have been commercially available to thereby make it possible to widely select writing instruments according to uses of users and make a workability thereof comfortable.

The present applicants disclose 1) a writing instrument having a writing wick which can derive an ink fed from a barrel constituting a writing instrument body and store the ink, wherein a pen tip is provided with a visible part as window part capable of visually recognising a writing direction refer to, for example, claims and FIG. 7 of Japanese Patent Application Laid-Open No. 2000-52682, and 2) a writing instrument in which a pen tip is provided with a writing part and a holding part having an ink guiding part for feeding an ink to the writing part and having a relay porous body for feeding the ink stored in a writing instrument body to the holding part and in which the holding part is a visible part capable of visually recognising a writing direction refer to, for example, claims and FIG. 3 of Japanese Patent Application Laid-Open No. 2012-20575.

In such a types of the writing instruments, written lines can be recognised through the respective visible parts at the pen tips, and therefore lines can be drawn precisely only at sites desired to check without exceeding.

However, in the writing instrument disclosed in Japanese Patent Application Laid-Open No. 2000-52682 described above, the ink is fed to the pen wick in a mechanism in which the ink is fed from the ink guiding parts at both sides to the writing part, and the ink passage is limited, so that the ink is unevenly fed at an outside and a central part of the writing part in the pen wick to cause an intensity difference or nonuniformity in intensity on the drawn lines in slight cases. Also in the writing instrument disclosed in Japanese Patent Application Laid-Open No. 2012-20575 described above, the ink is fed from a centre of the writing part to an outside thereof in feeding of the ink from the ink guiding part to the writing part of the pen wick, so that the ink is unevenly fed at a central part and an outside of the writing part to cause an intensity difference or nonuniformity in intensity on the drawn lines in slight cases.

Particularly when a size of a colourant such as coloured resin particles blended in an ink composition exceeds 1 $\mu$m in terms of a $D_{50}$ particle diameter, the tendency described above is liable to be displayed. Also, if an aggregating agent loosely aggregating a colourant is blended, the problem that the tendency described above is intensively exhibited is involved therein.

Disclosure of the Invention

In light of the problems on the conventional art described above, the present invention intends to solve the problems, and an object thereof is to provide a writing instrument providing a pen tip with a visible part capable of visually recognising a writing direction, wherein lines having no intensity difference can be drawn without unevenly feeding an ink to a pen wick.

Intense investigations repeated in order to solve the conventional problems described above have resulted in finding that the writing instrument which meets the object described above can be obtained by feeding an ink composition stored in a writing instrument body to a pen wick of a pen tip, providing a pen tip with a visible part capable of visually recognising a writing direction, having a porosity of the pen wick of 30 to 70%, wherein the ink composition for the writing instrument comprises coloured resin particles having a $D_{50}$ particle diameter of 1 to 10 $\mu$m and has an ink viscosity of 8 to 20 mPa·s, and modifying a particle size distribution to a specific range, and thus the present invention has come to be completed.

That is, the writing instrument of the present invention is characterised by feeding an ink composition for a writing instrument stored in a writing instrument body to a pen wick at a pen tip, providing the pen tip with a visible part capable of visually recognising a writing direction, having a porosity of the pen wick of 30 to 70%, wherein the ink composition for the writing instrument comprises coloured resin particles having a $D_{50}$ particle diameter of 1 to 10 $\mu$m and has an ink viscosity of 8 to 20 mPa·s, and the coloured resin particles have a particle size distribution: Mv/Mn of 1 to 3.

The ink composition for the writing instrument described above has a surface tension of preferably 30 to 60 mN/m.

A contact angle of the ink composition for the writing instrument to a polyethylene terephthalate-made film is preferably 10 to 70°.

In the present invention, a lower limit value xx to an upper limit value zz which is a numerical range includes xx and zz.

Advantageous Effects of Invention

According to the present invention, provided is a writing instrument providing a pen tip with a visible part capable of visually recognising a writing direction, wherein lines having no intensity difference can be drawn without feeding unevenly an ink to a pen wick. In particular, provided is a writing instrument capable of drawing lines having no difference in an intensity even if coloured resin particles having a particle diameter exceeding 1 $\mu$m in terms of a $D_{50}$ particle diameter and an aggregating agent loosely aggregating a colourant are added to the ink composition.

Brief Description of Drawings

FIG. 1 shows one example of an embodiment in the writing instrument of the present invention, wherein FIG. 1A is a plan view; FIG. 1B is a front view; and FIG. 1C is a vertical cross section.
FIG. 2 shows a perspective drawing of the writing instrument releasing a cap shown in FIG. 1.
FIG. 3 shows another example of an embodiment in the writing instrument of the present invention, wherein FIG. 3A is a plan view; FIG. 3B is a front view; and FIG. 3C is a vertical cross section.
FIG. 4 shows another example of an embodiment in the writing instrument of the present invention, wherein FIG. 4A is a plan view; FIG. 4B is a front view; and FIG. 4C is a vertical cross section.
FIG. 5 shows another example of an embodiment in the writing instrument of the present invention, wherein FIG. 5A is a plan view; and FIG. 5B is a vertical cross section.

Description of Embodiment

The embodiment of the present invention will be explained below in detail while referring to the drawings.

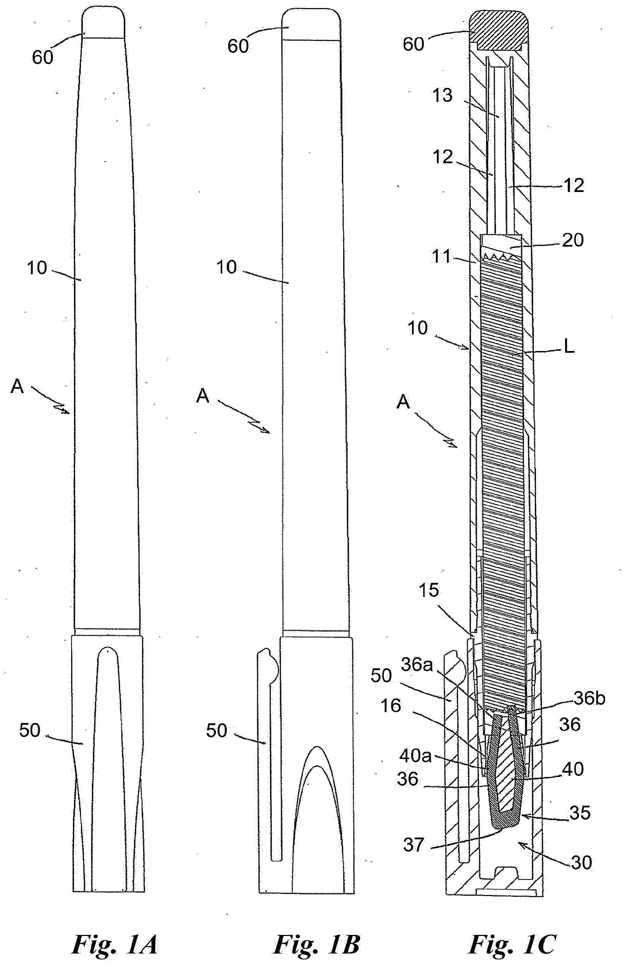

FIG. 1A to FIG. 1C are a plan view, a front view and a vertical cross section.

The writing instrument A of the present embodiment is a writing instrument of a marking pen type and includes, as shown in FIG. 1A to FIG. 1C, a barrel 10 which is a writing instrument body, an ink occlusion body 20, a pen tip 30, a pen wick 35, a holding body 40 having a visible part, a cap 50, and a friction body 60.

The barrel 10 is formed by, for example, a thermoplastic resin, a thermosetting resin and the like and includes, as shown in FIG. 1C, a bottomed cylindrical rear barrel 11 for housing the ink occlusion body 20 impregnated with the ink composition for the writing instrument, and a front barrel 15 including the holding body 40 stuck thereto having a visible part to which the pen wick 35 of the pen tip 30 is fitted.

The rear barrel 11 is formed, for example, in a bottomed cylindrical shape using a resin including PP and the like and functions as a main body (barrel) of the writing instrument. The rear barrel 11 is provided, as shown in FIG. 1C, with a holding member 13 comprising holding pieces 12, 12 --- for holding a rear end part of the ink occlusion body 20 in an inside at a rear end side, and the whole rear barrel and a front barrel described later are molded in an opaque or transparent and translucent state, but any state may be employed from the viewpoint of appearance and practicality. Further, the front barrel 15 is structured so as to be stuck to a front side of the rear barrel 11 by engagement and the like.

The front barrel 15 is provided with an engaging part 16 including the holding body 40 stuck thereto having the visible part to which the pen wick 35 of the pen tip 30 described later is secured. The front barrel 15 of this structure is formed by a resin comprising, for example, PP and the like.

The ink occlusion body 20 is impregnated with the ink composition for the writing instrument containing the coloured resin particles having a $D_{50}$ particle diameter of 1 to 10 $\mu$m described later, and the ink occlusion body 20 is obtained by processing fibre bundles comprising combinations of at least one of, for example, natural fibres, animal fibres, polyacetal resins, acryl resins, polyester resins, polyamide resins, polyurethane resins, polyolefin resins, polyvinyl resins, polycarbonate resins, polyether resins, and polyphenylene resins, and felt. Further, the ink occlusing body 20 includes porous bodies such as sponge, resin particles, sintered bodies and the like. The ink occlusion body 20 is stored and held in the writing instrument 10.

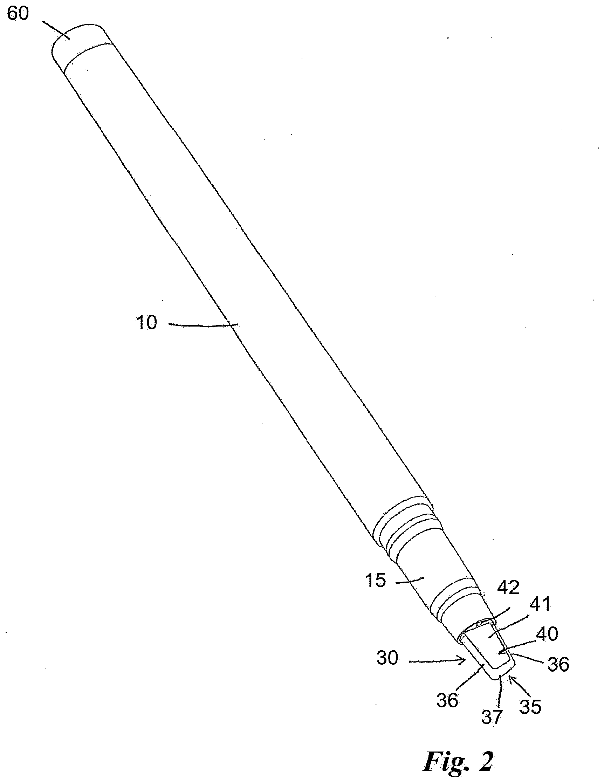

The pen tip 30 includes the holding body 40 holding the pen wick 35 and having the visible part. The holding body 40 holding the pen wick 35 secures, as shown in FIG. 1A to FIG. 1C and FIG. 2, the pen wick 35 constituting a writing wick and is stuck to a front end opening part of the front barrel 15 in the writing instrument body 10. The pen tip 30 includes the visible part 41 capable of visually recognising a writing direction and a holding part (not illustrated) for holding a tip side, end surface, of the pen wick 35 at a tip side of the visible part 41.

A holding groove (not illustrated) for inserting and holding the pen wick 35 of a channel shape is formed over a whole outer peripheral surface of the holding part 40 in a longitudinal direction. Further, an air passing groove 42 is formed on the outer peripheral surface of the holding part 40 in the longitudinal direction.

The holding part 40 constituted in such the manner is composed of a hard material and composed of, for example, a hard material having visibility such as a resin without rubbery elasticity. The holding part 40 is composed by molding of materials without rubbery elasticity having a visible light transmittance of 50% or more such as, for example, PP, PE, PET, PEN, nylon including amorphous nylon and the like other than conventional 6 nylon, 12 nylon, acryl, polymethylpentene, polystyrene, and ABS to thereby make it possible to visually recognise effectively characters written in a writing direction by the visible part 41. Only the visible part 41 may be composed of a material having visibility. The visible light transmittance can be determined by measuring a reflectance by means of a multi-light spectral colourimeter, MSC-5N, manufactured by Suga Test Instruments Co., Ltd.

The holding part 40 may be constituted by using one of the respective materials described above or two or more of the materials from the viewpoint of further improving durability and visibility, and the holding part 40 can be molded by various molding methods such as injection molding and blow molding.

The whole pen wick 35 is formed in an approximate chanel shape as shown in FIG. 1A to FIG. 1C and FIG. 2 and includes ink guiding parts 36, 36 and a writing part 37 for inducing an ink from the ink guiding parts 36, 36.

The pen wick 35 is composed of a porous member so as to have a good ink flowability. The pen wick includes, for example, materials obtained by processing or resin-processing parallel fibre bundles comprising combinations of at least one of fibres such as natural fibres, animal fibres, polyacetal resins, polyethylene resins, acryl resins, polyester resins, polyamide resins, polyurethane resins, polyolefin resins, polyvinyl resins, polycarbonate resins, polyether resins, and polyphenylene resins, and fibre bundles or porous bodies (sintered wick) obtained by sintering plastic powders of thermoplastic resins such as polyolefin resins, acryl resins, polyester resins, polyamide resins, and polyurethane resins.

The preferred pen wick 35 is a fibre bundle wick, a fibre wick, a sintered wick, a felt wick, a sponge wick and an inorganic porous wick and particularly preferably the sintered wick from the viewpoints of a deformation moldability and a productivity.

The pen wick 35 used in the present invention has preferably a pore size of 30 to 60 $\mu$m and a porosity of 30 to 70% from the viewpoint of further displaying the effects of the present invention. The predetermined pore size and/or porosity make an intensity difference less liable to be caused and prevent the liquid from leaking which are the effects of the present invention in combination with ink properties described later.

The pen wick 20 of the present embodiment is composed of the sintered wick (sintered body) having a pore size of 50 $\mu$m and a porosity of 60% obtained by sintering polyethylene powder having an average particle diameter of 200 $\mu$m.

The "$D_{50}$ particle diameter" prescribed in the present invention is a value calculated by a refractive index of 1.81 on a volume basis using a particle size distribution analyzer HRA9320-X 100 manufactured by Nikkiso Co., Ltd.

The "Porosity" is calculated as follows. First, a pen wick having known mass and apparent volume is dipped in water and sufficiently impregnated with water, and then a mass thereof is measured in a state of taking the pen wick out from water. A volume of water impregnated into the pen wick is derived from the measured mass. Assuming that the volume of water is the same as a pore volume of the pen wick, a porosity is calculated from the following equation (A) :

$$\text{porosity (unit: \%)} = \text{(volume of water)}/\text{(apparent volume of pen wick)} \times 100 \quad (A)$$

"Pore size" is determined by measuring pore size distribution by means of a mercury porosimeter, Pore Master GT type, manufactured by QUATACHROM Inc. and setting an average value thereof to a pore size.

The pen wick 35 having the characteristics described above is preferably subjected to hydrophilic treatment by using a surfactant. The hydrophilic treatment includes, for example, a method of treating the pen wick with a solution containing a surfactant. The surfactant includes at least one of anionic surfactants such as alkylcarboxylate ester, alkylsulfate ester, and alkylphosphate ester, cationic surfactants such as aliphatic ammonium salts, nonionic surfactants such as (polyoxyethylene) alky ether, (polyoxyethylene) fatty acid ester ether, and (polyoxyethylene) sorbitan fatty acid ester.

The pen wick 35 of the present embodiment has a length of preferably 0.50 mm or more, particularly preferably 1.00 to 3.00 mm in a width direction from the viewpoint of securing a satisfactory writing flow amount.

The writing part 37 is inclination-shaped or knife cut-shaped so as to be inclined for easy writing, and the inclination is suitably set according to usability of the writing instrument. The writing part 37 draws lines having a broad width, a width of preferably 1 mm or more, more preferably 2 mm or more.

In the pen tip 30, the pen wick 35 described above is stuck (installed) to the holding body 40 by inserting and holding the pen wick 35 described above in a holding part and the like (not illustrated). Further, in order to securely stick or retain the pen wick 35, further adhering by adhesive and welding may be used.

When the holding body 40 to which the pen wick 35 constituted in the manner described above is stuck is inserted into the front barrel 15, an engaging part 40a of the holding body 40 is engaged with an engaging part 16 of the front barrel 15, whereby the pen wick 35 is installed or stuck to the writing instrument body 10 via the holding body 40, and rear side end parts 36a, 36b of the ink guiding parts 36, 36 in the pen wick 35 are constituted so as to get into a tip side inside of the ink occlusion body 20.

In the present embodiment, lengths of the ink guiding parts 36, 36 at a rear side are shorter in one rear side end part 36a and longer in the other rear side end part 36b, and the inserted lengths are different. This is attributable to that the whole part assumes a channel shape before the pen wick 35 is mounted to the holding body 40, but since the writing part 37 is mounted to the holding body 40 in an inclined state, the rear side end part 36b (or 36a) at a lower side (or upper side) is constituted so as to get into the tip side inside of the ink occlusion body 20 in a longer manner after mounted to the holding body 40. Further, since the inserted lengths are different, an amount of the ink introduced from the ink occlusion body 20 is different depending on portions, and therefore the ink is introduced more efficiently into the pen wick 35 than a case of the same inserted length.

Concave parts for inserting 36a and 36b of the rear side end parts 36 and the ink guiding parts 36 into the tip side inside of the ink occlusion body 20 may be formed. The ink drops from the pen tip when the barrel 10 is increased in a pressure in an inside, but in the writing instrument A of the present embodiment, an inside of the barrel 10 and an outside thereof are adjusted, as shown in FIG. 2, via the air passing groove 42.

The cap 50 is detachably installed on a tip side outer peripheral surface of the front barrel 15 by engagement and the like.

The friction body 60 is stuck to a rear end part of the rear barrel 11, and when thermochromic coloured resin particles are used for the coloured resin particles of an ink composition for a writing instrument described later, thermochromic drawn lines (handwriting or image) can be surely thermally discoloured (decoloured or disclored to a different colour) at only parts which are desired to be thermally discoloured.

An elastic material constituting the friction body 60 includes rubber and elastomer of elastic synthetic resins and includes, for example, silicone resins, SBS resins (styrene-butylene-styrene copolymers), SEBS resins (styrene-ethylene-butylene-styrene copolymers), fluorinated resins, chloroprene resins, nitrile resins, polyester base resins, olefin base resins, ethylene propylene diene rubbers, EPDM, silicone rubbers, nitrile rubbers, styrene elastomers, olefin elastomers, polyester elastomers, or mixtures of two or more thereof.

The friction body 60 can be formed preferably by rubbers and elastomers of the synthetic resins described above having erasing ability or erasing ratio of less than 70% of pencil drawn lines prescribed in JIS S 6050-2002 to prepare a low-abrasive friction body which easily generates frictional heat by scratching action.

In the writing instrument A according to the present invention, the ink occlusion body 20 occluding an ink composition for a writing instrument described later is inserted into the rear barrel 11 constituting the barrel 10 of the writing instrument and held therein, and the holding body 40 including the front barrel 15 and the pen wick 35 secured thereto by engaging, holding and the like and having the visible part 41 is stuck thereto in order by engaging and the like to thereby make it possible to easily prepare the writing instrument A. The ink composition for a writing instrument occluded in the ink occlusion body 20 is efficiently fed to the writing part 37 of the pen wick 35 by a capillary force and used for writing.

The ink composition for a writing instrument occluded in the ink occlusion body 20 contains at least the coloured resin particles having a $D_{50}$ particle diameter of 1 to 10 $\mu$m.

The usable coloured resin particles shall not specifically be restricted as long as they are constituted from coloured resin particles and include, for example, 1) coloured resin particles in which a colourant comprising an inorganic pigment such as carbon black and titanium oxide and an organic pigment such as phthalocyanine pigments and azo pigments 2) coloured resin particles in which surfaces of resin particles are dyed with a colourant comprising the pigments described above, 3) coloured resin particles in which resin particles are dyed with a colourant comprising a dye such as a direct dye, an acid dye, a basic dye, a food dye and a fluorescent dye, 4) coloured resin particles provided with a thermochromic property by using leuco dyes and the like, and 5) coloured resin particles provided with a photochromic property by using photochromic pigments (compounds) which are optically discolouring pigments, fluorescent dyes and the like.

Resin components of the coloured resin particles of 1) to 3) described above include, for example, at least one selected from polymers or copolymers of acrylic acid, methacrylic acid, acrylate, methacrylate, styrene, acrylonitrile, butadiene and the like, and at least one selected from benzoguanamine, phenol resins, epoxy resins, urethane resins and the like, and the plynmers may be subjected, if necessary, to crosslinking treatment. Methods such as suspension polymerization and dispersion polymerization which have so far been publicly known are used as a colouring method of the above resins.

The thermochromic coloured resin particles of 4) described above include thermochromic coloured resin particles produced by microencapsulating a thermochromic composition containing at least a leuco dye which is an electron-donating dye and functions as a colour developer, a developer which is a component having potential of developing a colour of the leuco dye and a discolouration temperature regulator which can control discolouration temperature in developing the colour with the leuco dye and the developer described above so as to be provided with a predetermined $D_{50}$ particle diameter.

The microencapsulating method includes, for example, an interfacial polycondasation method, an interfacial polymerisation method, an in situ polymerisation method, an in-liquid curing coating method, a phase separation method from an aqueous solution, a phase separation method from an organic solvent, a melting dispersion cooling method, a gas suspension coating method, a spray drying method, and the method can suitably be selected according to uses. For example, the phase separation method from an aqueous solution, a leuco dye, a developer and a discolouration temperature regulator are heated and molten and then put into an emulsifier solution, and the mixture is heated while stirring and dispersed in a droplet state; then, resin materials which form a wall film of a urethane resin, an epoxy resin, an amino resin and the like are used for a capsule film agent, for example, amino resin solutions, to be specific, the respective solutions such as a methylolmelamine aqueous solution, a urea solution, and a benzoguanamine solution are gradually added and continuously reacted to prepare a dispersion; and the dispersion is filtrated, whereby thermochromic coloured resin particles comprising a thermochromic microcapsule pigment can be produced. In the thermochromic coloured resin particles, the kinds and the amounts of the leuco dye, the colour developper and the discolouration temperature regulator can be suitably combined to thereby set the colour developing temperature and the decolourisation temperature of the respective colours to suitable temperatures.

The thermochromic coloured resin particles described above are preferably reversibly thermochromic. The reversibly thermochromic coloured resin particles can be constituted by using alone or in combination various types such as a heating decolouration type of a colour developing state to decolouration by heating, a colour memory holding type of memorizing and holding alternately a colour developing state or a decolouration state in a specific temperature region, or a heat colour developing type of colour-developing from a decolouration state by heating and recovering from a colour developing state to a decolouration state by cooling, and the like.

The photochromic coloured resin particles of 5) include, for example, photochromic coloured resin particles constituted by at least one selected from a photochromic dye or compound, a fluorescent dye and the like and a resin such a terpene phenol resin, and photochromic coloured resin particles produced by microencapsulating a photochromic composition containing at least one selected from a photochromic dye or compound, a fluorescent dye and the like and additives such as an organic solvent, an antioxidant, a light stabilizer, and a sensitizer so as to obtain a predetermined $D_{50}$ particle diameter. In the microencapsulating method, the photochromic coloured resin particles can be produced in the same manner to produce the thermochromic coloured resin particles described above.

The photochromic dye or compound, the fluorescent dye and the like can suitably be used, whereby the photochromic coloured resin particles can be provided with a property in which the photochromic coloured resin particles are colourless under, for example, an indoor lighting environment i.e., a lighting instrument selected from an incandescent lamp, a fluorescent lamp, a lamp, white LED and the like in an indoor and coloured under UV light irradiation environment i.e., irradiation with 200 to 400 nm wavelength and irradiation environment with sunlight including a UV light.

Among the respective coloured resin particles described above, the hollow reins having voids in an inside of the particles can be used as a white pigment, and the respective coloured resin particles of 1) to 5) described above can be used as a fluorescent pigment, a microcapsule pigment or colourant of a thermochromic pigment and a photochromic pigment. Further, the respective resin particles produced by publicly known production methods can be used for the respective resin particles of 1) to 5) described above, and if commercial products are available, commercial products may be used.

The coloured resin particles described above are provided with a $D_{50}$ particle diameter of 1 to 10 $\mu$m, preferably 1 to 5 $\mu$m from the viewpoint of exerting a colouring power and the effects of the present invention.

If the $D_{50}$ particle diameter of the coloured resin particles is less than 1 $\mu$m, the colouring power is unsatisfactory. On the other hand, if the diameter exceeds 10 $\mu$m, flowability of the ink from the pen wick is inferior, and the ink is unfavorably reduced in a dispersion stability.

In the present invention, it is important that the coloured resin particles used have, as described above, a definite size or a range of the $D_{50}$ particle diameter described above.

In the present invention, if the coloured resin particles having the $D_{50}$ particle diameter described above are used and provided with a definite flexibility, the coloured resin particles are preferable, since the ink is not inhibited from flowing even in an inside of the pen wick where the voids are easily changed (high porosity) to make it less liable to cause an intensity difference.

The coloured resin particles having the $D_{50}$ particle diameter described above have preferably a 10% strength of 30 MPa or less measured by a micro compression test. This can make the coloured resin particles soft, and the soft coloured resin particles are provided with the foregoing characteristic that the ink is not inhibited from flowing in an inside of the pen wick to make it less liable to cause an intensity difference. Further, the coloured resin particles having a 10% strength of 5 MPa or more make it possible to cause the ink to more stably flow out.

That is, the foregoing 10% strength of 5 to 30 MPa makes it possible to cause a good flowing stability of the ink and drawn lines having no intensity difference to be compatible to a high extent.

In the present invention, the "microcompression test" can be carried out by means of, for example, MCT-510 manufactured by Shimadzu Corporation. In this case, an average value of five particles can be used.

The 10% strength can be calculated according to the following equation:

$$C\ (x)\ =\ (2.48\ \times\ P)/(\pi\ \times\ d^2)$$

C (x): 10% strength/MPa
P: testing force/N in 10% displacement of particle diameter
d: particle diameter/mm

A content of the coloured resin particles is preferably 3 to 30%, more preferably 10 to 30% based on a total amount of the ink composition. If the content of the coloured resin particles is less than 3%, the preferred drawn line intensity is not obtained. Further, if the content exceeds 30%, the writing feeling is heavy, and the drawn lines are unfavorably liable to be blurred.

An aggregation agent is preferably contained in the ink composition for a writing instrument. Using the coloured resin particles having a large $D_{50}$ particle diameter easily causes colour separation with aging. This is inhibited by using the aggregation agent, but on the other hand, the problem of density difference is liable to be caused. In the present invention, if adding the aggregation agent, the effects of the present invention can be caused to be compatible to a high extent by adjusting the ink viscosity and the like and using the pen wick having the characteristics described above.

The usable aggregation agent includes at least one of methylcellulose, ethylcellulose, hydroxymethylcellulose, hydroxyethylcellulose, hydroxypropylcellulose, hydroxyethylethylmethylcellulose, and hydroxypropylmethylcellulose, and hydroxyethylcellulose is particularly preferably used from the viewpoint of a good aggregation property of the particles.

Among the aggregation agents, the aggregation agent having a viscosity of 7 mPa·s or more and 1000 mPa·s or less for 2% by mass of the aqueous solution is preferred. If the aqueous solution of 2% by mass for the aggregation agent has a viscosity exceeding 1000 mPa·s, the ink is reduced in an outflow property. On the other hand, if the aqueous solution of 2% by mass for the aggregation agent has a viscosity smaller than 7 mPa·s, the effect is not obtained.

A content of the aggregation agent is preferably 0.1 to 1% based on a total amount of the ink composition according to the viscosity for the aqueous solution described above.

In the ink composition for a writing instrument used, the coloured resin particles, the aggregation agent having the characteristics described above, and in addition thereto, water such as tap water, refined water, distilled water, ion-exchanged water, and purified water as a residual part which is a solvent, a water-soluble organic solvent, a thickener, a preservative or a fungicide, a water-soluble resin, a resin emulsion, and the like can suitably be added in a range where the effects of the present invention are not deteriorated.

The usable water-soluble organic solvent includes, for example, glycols such as ethylene glycol, diethylene glycol, triethylene glycol, propylene glycol, polyethylene glycol, 3-butylene glycol, thiodiethylene glycol, glycerin, and the like, ethylene glycol monomethyl ether, diethylene glycol monomethyl ether and the like, and they can be used alone or in mixtures.

The usable thickener is preferably at least one selected from, for example, the group consisting of synthetic polymers and polysaccharides. To be specific, the group includes gum arabic, tragacanth gum, guar gum, locust bean gum, alginic acid, carrageenan, gelatin, xanthan gum, welan gum, succinoglycan, daiyutan gum, dextran, starch glycolic acid and salts thereof, alginic acid propylene glycol ester, polyvinyl alcohol, polyvinylpyrrolidone, polyvinyl methyl ether, polyacrylic acid and salts thereof, carboxyvinyl polymers, poly(ethylene oxide), copolymers of vinyl acetate and polyvinylpyrrolidone, cross-linking type acrylic acid polymers and salts thereof, non-cross-linking type acrylic acid polymers and salts thereof, styrene acrylic acid copolymers and salts thereof.

The preservative or the fungicide includes phenol, sodium omadine, sodium benzoate, benzimidazole compounds and the like.

The water-soluble resin includes, for example, polyacrylic acid, water-soluble styrene-acryl resins, water-soluble styrene-maleic acid resins, water-soluble maleic acid resins, water-soluble styrene resins, polyvinylpyrrolidone, polyvinyl alcohol, water-soluble ester-acryl resins, ethylene-maleic acid polymers, poly(ethylene oxide), water-soluble urethane resins, and the like.

The resin emulsion includes, for example, acryl emulsions, vinyl acetate emulsions, urethane emulsions, styrene-butadiene emulsions, styrene acrylonitrile emulsions and the like.

These water-soluble resins and resin emulsions can be used alone or in a mixture of two or more thereof.

Conventionally known methods can be adopted for producing the ink composition for a writing instrument, and in addition to, for example, the coloured resin particles having the $D_{50}$ particle diameter described above, the respective components described above are blended in predetermined amounts followed by stirring and mixing the components by means of a stirring device such as a homo mixer and a disperser, whereby the ink composition is obtained. Further, coarse particles in the ink composition may be removed, if necessary, by filtration or centrifugation.

In the present invention, the pH in the ink composition for a writing instrument is preferably 5.0 to 8.0, more preferably 7.0 or less from the viewpoints of an ink stability and more effectively exerting the effect of the aggregation agent by setting the predetermined pH when blending the aggregation agent.

Modification of pH can be made, if necessary, by using a pH modifier. The pH modifier used includes, for example, hydroxides of alkali metals such as sodium hydroxide, potassium hydroxide, and lithium hydroxide, amine compounds such as triethanolamine, diethanolamine, monoethanolamine, dimethylethanolamine, morpholine, and triethylamine and ammonia.

A viscosity of the ink composition for a writing instrument is preferably 8 to 20 mPa·s measured at 25°C and a shearing rate of 192 s$^{-1}$ by means of a cone plate type viscometer from the viewpoint of further exerting a stability of the coloured resin particles having the $D_{50}$ particle diameter described above.

The above viscosity range can be modified by the amounts of the respective components as the ink components described above and addition of the thickener and the like.

The ink composition for a writing instrument has a surface tension of preferably 30 to 60 mN/m, more preferably 30 to 45 mN/m at 25°C from the viewpoints of more effectively drawing lines having no intensity difference and making it less liable to cause strike-through. The above surface tension can be modified by the amounts of the respective components as the ink components described above and addition of the thickener and the like.

The particle size distribution: Mv/Mn of the coloured resin particles in the ink composition for a writing instrument has to be 1 to 3, preferably 1 to 2 in order to prevent causing an intensity difference by homogenising a particle flowability in an inside of the pen wick.

A volume average particle diameter: Mv and a number average particle diameter: Mn of the coloured resin particles can be measured by means of a particle size distribution measuring device HRA9320-X100 manufactured by Nikkiso Co., Ltd. Also, the particle size distribution: Mv/Mn can be calculated from the values of Mv and Mn measured.

A contact angle between the ink composition and a poly(ethylene terephthalate)-made film is preferably 10 to 70°, more preferably 20 to 40° from the viewpoints of a wettability between the ink and the pen wick and preventing the ink from dripping.

The above contact angle can be modified by the amounts of the respective components as the ink components described above and addition of the thickener and the like.

The ink composition for a writing instrument constituted in the manner described above is prepared into, for example, a coloured resin particle ink, a fluorescent ink, a thermochromic ink and the like according to the kind of the coloured resin particles described above.

In the present embodiment, the ink occlusion body 20 is impregnated with the ink in such configuration (an impregnated portion is represented by an illustrated mark L) that the ink is not impregnated, as shown in Fig. 1C, up to both end surfaces for front side and rear side of the ink occlusion body 20.

In the present embodiment, an impregnated volume of the ink occlusion body 20 is 80% based on a total volume. This is because of preventing the ink from being scattered due to impact by falling and the like. The impregnated volume of the ink occlusion body 20 may be such the configuration (illustrated mark L) that the ink is not impregnated up to both end surfaces for front side and rear side of the ink occlusion body 20, and the impregnated volume of 60 to 95% based on the total volume makes it possible to cause preventing the ink from being scattered due to impact by falling and the like and efficiently feeding the ink to the pen wick to be compatible to a high extent.

The ink composition for a writing instrument impregnated in the present embodiment comprises a blend composition prepared by using the coloured resin particles described above.

The writing instrument A according to the present invention includes the ink occlusion body 20 occluding the ink composition for a writing instrument having the characteristics described above inserted and held in the barrel 10 of the writing instrument, and at a tip side, the holding body 40 having the visible part 41 includes the pen wick 35 constituted in the manner described above stuck thereto via the front barrel 15 in order by engaging, holding and the like to thereby make it possible to easily prepare the writing instrument A. The ink composition for a writing instrument occluded in the ink occlusion body 20 is efficiently fed to the writing part 37 of the pen wick 35 at the pen tip 30 by a capillary force and used for writing or marking and the like.

The writing instrument A according to the present invention feeds the ink composition for a writing instrument occcluded in the writing instrument body 10 to the pen wick 35 at the pen tip 30, has the visible part 41 capable of visually recognising a drawing direction, modifies a porosity of the pen wick 35 to 30 to 70%, contains the coloured resin particles having a $D_{50}$ particle diameter of 1 to 10 $\mu$m in the ink composition described above, cmodifies an ink viscosity to 8 to 20 mPa·s, and modifies a particle size distribution Mv/Mn of the coloured resin particles to 1 to 3, whereby obtained is the writing instrument making it possible to draw written lines having no intensity difference without unevenly feeding the ink at an outside and a central part of the writing part 37 in the pen wick 35. In particular, even if the ink composition is blended with the coloured resin particles having a large size exceeding 1 $\mu$m in terms of a $D_{50}$ particle diameter and the aggregation agent which is a component loosely aggregating a colourant, written lines having no intensity difference can be drawn.

Further, the effects of the present invention can be enhanced more by using the coloured resin particles of the $D_{50}$ particle diameter described above having preferably a 10% strength of 5 to 30 MPa measured by the micro compression test and the ink composition having the characteristics for a viscosity, a surface tension and pH in the respective predetermined scopes described above.

In the writing instrument A of this type, an area of the visible part 41 is maximized, and written characters are recognised through the visible part 41, so that lines can be drawn just only at a portion desired to check without exceeding.

Further, in the writing instrument A, the friction body 60 is stuck to a rear end part of the rear barrel 11 of the writing instrument body 10, and the ink composition is of a blend composition prepared by using the thermochromic coloured resin particles, so that thermochromic lines of handwritings or images can be drawn by the writing part 37 in such an embodiment as capable of surely thermally discolouring only portions desired to thermally discolour (decolour or change to a different colour) by the friction body 60 (by generating frictional heat by scratching action).

The writing instrument according to the present invention can be changed to various modes without being restricted to the embodiments described above as long as the architecture of the present invention is not changed.

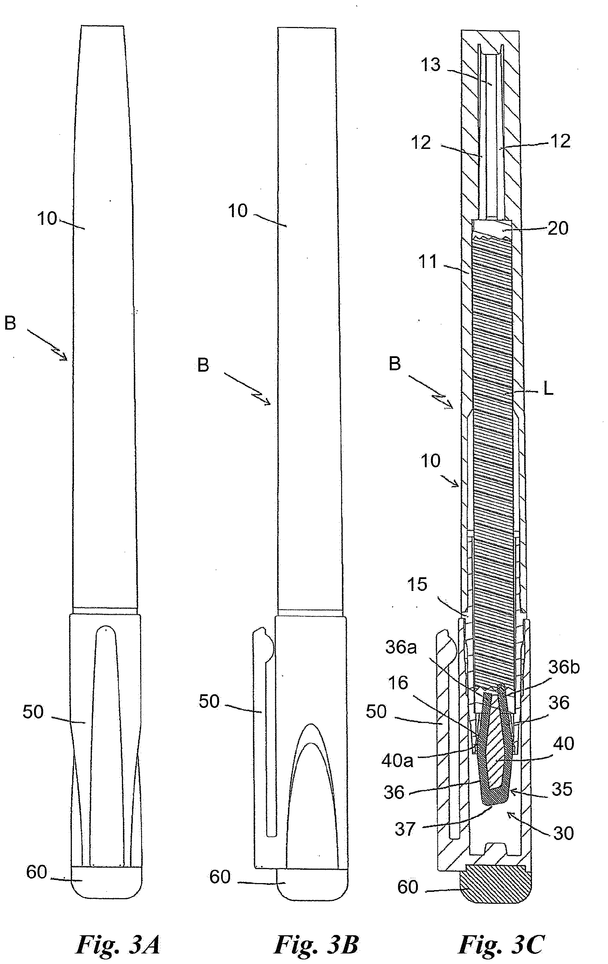

FIG. 3A to FIG. 3C, FIG. 4A to FIG. 4C and FIG. 5A to FIG. 5B are respective drawings showing different embodiments of the writing instrument according to the present invention. The same constitutions as shown in FIG. 1A to FIG. 1C and FIG. 2 are shown by the same numerals, and the explanations thereof are omitted. In the respective writing instruments shown in FIG. 3A to FIG. 3C, FIG. 4A to FIG. 4C and FIG. 5A to FIG. 5B, the ink composition used is the same as used for the writing instrument A of the embodiment described above.

The writing instrument B of the embodiment shown in FIG. 3A to FIG. 3C is different only in a respect of sticking the friction body 60 on a top of the cap 60 and used in the same manner as the writing instrument A to exert the same effects as the writing instrument A. In the writing instrument B, thermochromic lines (handwritings or images) can be drawn by the writing part 37 of the pen wick 35 in such an embodiment as capable of surely thermally discolouring only portions desired to thermally discolour (decolour or change to a different colour) by the friction body 60 stuck on the top of the cap 50 to generate frictional heat by scratching action.

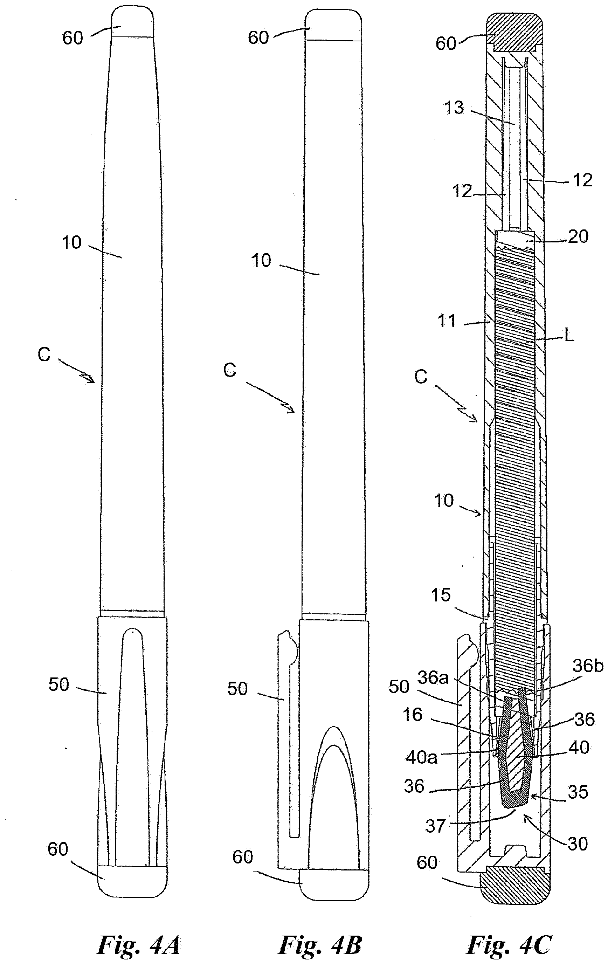

The writing instrument C shown in FIG. 4A to FIG. 4C is prepared in an embodiment of sticking the friction bodies 60 to a rear end part of the rear barrel 11 and the top of the cap 60 respectively (the friction bodies 60 are stuck to two portions) and used in the same manner as the respective embodiments described above to exert the same effects as those of the writing instrument A or the writing instrument B.

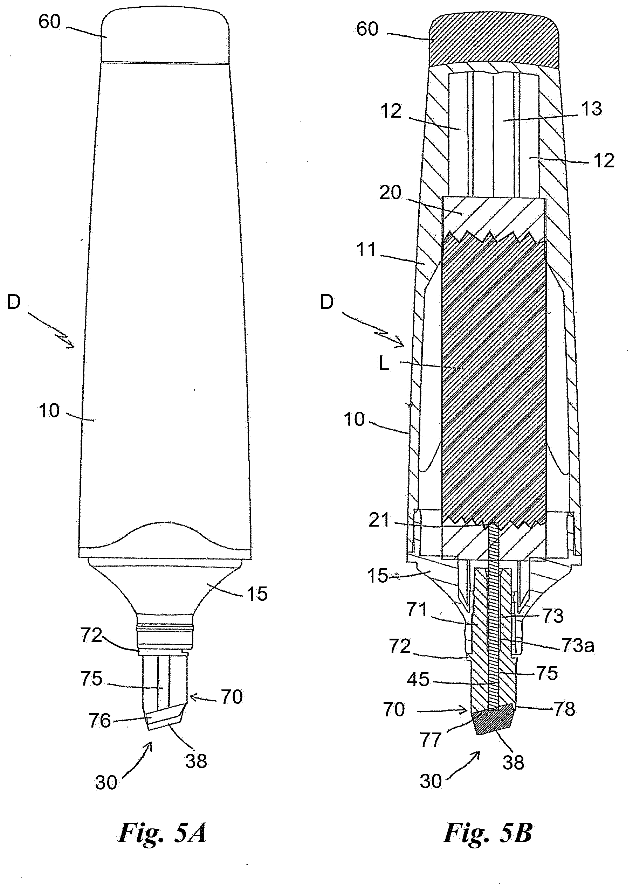

FIG. 5A and FIG. 5B show a writing instrument D which is different in an ink feeding mechanism and a shape of a visible part from the writing instrument A shown in FIG. 1A to FIG. 1C and FIG. 2, the writing instrument B shown in FIG. 3A to FIG. 3C and the writing instrument C shown in FIG. 4A to FIG. 4C. The constitution and the like different from the writing instrument A of the embodiment described above will be mainly explained below.

The writing instrument D has an embodiment of including a porous body 38 which is a writing part at a pen tip 30 and an ink guiding wick 45 disposed in an inside of a holding body 70 to hold the porous body 38 and feed the ink composition for a writing instrument to a writing body 38, wherein the holding body 70 described above is a visible part capable of visually recognising a drawing direction.

The writing instrument D of the above embodiment is a writing instrument of a marking pen type and includes, as shown in FIG. 5A and FIG. 5B, a flat barrel 10 having an elliptical cross section which is a writing instrument body (barrel part), an ink occlusion body 20, the pen tip 30 and the ink guiding wick 45.

The barrel 10 and the ink occlusion body 20 which constitute the writing instrument body are constituted in the same manner as the writing instrument A, and the same numerals are shown to omit the explanations thereof. Also, the ink composition occluded in the ink occlusion body 20 is the same as the ink composition described in detail in the embodiment described above, so that the explanations thereof are omitted.

The ink guiding wick 45 is a relay wick for feeding the ink occluded in the ink occlusion body 20 directly to the porous body 38 which is the writing part stuck to the holding part 70 at the pen tip 30 described later, and the ink guiding wick 45 is structured so as to be inserted into an insertion part 21 at a front side of the ink occlusion body 20. The ink guiding wick 45 includes, as is the case with the ink occlusion body 20, a fibre bundle wick prepared by processing fibre bundles such as a fibre bundle and a felt, a resin particle porous body comprising a hard sponge, a resin sintered body and the like, a wick having continuous pores as flow passage such as a sliver wick. A form, a constitution and the like of the ink will not specifically be restricted as long as the ink impregnated in the ink occlusion body 20 can be fed to the porous body 38 which is the writing part stuck to the holding body 70 described later via the ink guiding wick 45. A cross-sectional shape of this ink guiding wick 45 includes, for example, circular, elliptical, square, rectangular, trapezoidal, parallelogram, diamond, quadrangle shapes other than the above shapes, semi-cylindrical, semi-circular and the like. The shape of the ink guiding wick 45 at a side of the visible part capable of visually recognising a drawing direction is preferably the same as or smaller than the side surface, and more preferably rectangular or elliptical to make it possible to secure an ink flow amount without disturbing visibility of the ink guiding part 75.

The pen tip 30 includes, as shown in FIG. 5A and FIG. 5B, the porous body 38 which is the writing part (pen wick) and also includes the holding body 70 holding the porous body 38 and having the cylindrical ink guiding part 75 provided with the ink guiding wick 45 described above for feeding the ink to the writing body. A body part 71 having a cylindrical body into which the ink guiding wick 45 is inserted is connected to the holding body 70 at a rear side.

A flange part 72 is disposed on an outer peripheral surface of the body part 71, and a rear side of the body part 71 is stuck into a tip opening part of the front barrel 15 by engaging to be structured so as to further prevent the ink guiding wick 45 from deviating and dropping off by falling and the like.

The porous body 38 which is the writing part is stuck to a tip part of the holding part 70 and is the same (30 to 70% for porosity) as the pen wick 30 described in detail in the embodiment of the writing instrument A described above, and therefore the explanations thereof are omitted.

An appearance shape of the porous body 38 which is the writing part includes, for example, chisel shape, shell shape, cylinder, ellipse, rectangular parallelepiped, and a cross-sectional shape thereof includes trapezoidal, parallelogram, diamond, semi-cylindrical, semi-circular and the like. In the present embodiment, the porous body 38 is the chisel shape. In the chisel shape, a tip thereof forms an inclined surface to a central line of the pen barrel, and the inclined surface is a flat shape. The porous body 38 which is the writing part inclines so as to be easy to write and preferably inclines at an angle of 40 to 90° to major axis direction of a body barrel, and in the present embodiment, the porous body 38 inclines at 75°. A shape, inclination and the like of the porous body 45 which is the writing part is suitably set according to convenience of use. The porous body 45 which is the writing part draws bold lines, and a drawn line width is preferably 2 mm or more, more preferably 3 mm or more.

At least one ink guiding part 75 for feeding the ink to the writing part is provided in an inside of the holding body 70 described above, and in the present embodiment, one ink guiding part 75 is arranged at an approximately central part in a longitudinal direction so as to cause the ink guiding part 75 to go through in terms of maximising an area rate of the visible part and efficiently feeding the ink to the porous body which is the writing part.

A shape, a size, a structure, the number and the like of the ink guiding part 75 can suitably be selected as long as the ink composition impregnated in the ink occlusion body 20 included in the writing instrument is structured so as to be efficiently fed to the porous body 38 which is the writing part via the body part 71 having the cylindrical part described above and the ink guiding wick 45 installed in the ink guiding part 75 by capillary action.

In particular, a length of the ink guiding part 75 in an axial direction is modified preferably to 3 mm or more in terms of securing a satisfactory writing flow amount to the ink guiding wick 45 and a visibility via the ink guiding part 75. Further, a total of a cross-sectional area of the ink guiding part 75 in an inside of the holding body 70 is preferably 3 mm$^2$ or more.

A shape of the ink guiding part 75 is preferably linear toward a writing part 38 side in a longitudinal direction, and a taper may be formed. Further, a plurality of two or more ink guiding parts may be provided at an angle of 0 to 30° toward a longitudinal direction of the body barrel, and only one ink guiding part may be provided.

In the present embodiment, a gap 73 is present between the ink guiding wick 45 and the ink guiding part 75, and the ink guiding wick 45 and the ink guiding part 75 are configured to be connected to the porous body 38 which is the writing part in a state of forming the gap 73 therebetween. The configuration constitutes the gap 73 so as to be filled with the ink, and ink feeding by the ink guiding wick 45 is combined with ink feeding by a capillary action or free ink action of the gap 73 to make it possible to visually recognise an ink residual amount. Also, constitution is such that if the ink runs out, writing can be continued for a while, so that the appearance can be recognised in a beautiful manner to make it possible to stably secure the quality and secure as well a passage of discharging air.

The ink guiding wick 45 may be brought into tight contact (tightly sealed) with the ink guiding part 75 without forming the gap 73 between the ink guiding wick 45 and the ink guiding part 75. Even in this case, the appearance can be recognised in a beautiful manner, and the ink of the ink occlusion body 20 can be efficiently fed in a suitable ink amount to the porous body 38 which is the writing part stuck to the holding body 70 at the pen tip 30.

The whole other than the ink guiding part 75 in which the ink guiding wick 45 of the holding body 70 described above is structured so as to form the visible part, and four outer surfaces (front face, back face, respective side faces) are approximately parallel surfaces in order to effectively visually recognise a writing direction.

Rib bodies 76, 76 (not illustrated) for holding the porous body 38 which is the writing part are disposed at both side surfaces of an upper side of the holding body 70 described above, and a bottom face part 77 brought into contact with a bottom face of the porous body 38 is disposed between the rib bodies. An outlet of the ink guiding part 75 is disposed at a central part of the bottom face part 77. Further, a contact part 78 brought into contact with a front end face of the porous body 38 is disposed at one end face of the rib part, and the other end face is an inlet into which the porous body 38 is inserted.

The holding body 70 including the body part 71 is constituted by materials having a visibility, for example, materials such as polypropylene, polyethylene, PET, PEN, nylon (including amorphous nylon and the like other than conventional nylons such as 6 nylon and 12 nylon), acryl, polymethylpentene, polystyrene, and ABS, and the holding body 70 is constituted preferably by materials having a visible light transmittance of 50% or more. The materials provided with a visible light transmittance of 80% or more in order to make it possible to exhibit better visible performance make visual recognition better. The holding body 70 can be constituted by one of the respective materials described above, or two or more of the materials in terms of enhancing more the visibility. In a case of constituting the holding body 70 by two or more of the materials, the holding body 70 is constituted preferably by at least one of the materials having a visible light transmittance of 50% or more, and the holding body 70 can be molded by various molding methods such as injection molding and blow molding.

In the writing instrument D of the embodiment constituted in the manner described above, the ink guiding part 75 is arranged at an approximately central part of the holding part 70, and the ink guiding wick 45 impregnated with the ink is disposed in the holding part 70, so that the ink composition impregnated in the ink occlusion body 20 can be efficiently fed to the porous body 38 which is the writing part via the ink guiding wick 45 by capillary action. Further, the ink guiding wick 45 is arranged in the ink guiding part 70 to thereby facilitate assemblability. Also, even when particularly strong impact is applied by falling impact and the like of the writing instrument, the ink guiding wick 45 can be prevented by sticking of the holding part 70 by engagement from deviating, dropping and the like, and the ink can be prevented from being blurred.

The writing instrument D capable of drawing lines having no intensity difference without feeding unevenly the ink at a central part and an outside of the porous body 38 is obtained, as is the case with the writing instruments A to C, by feeding the ink composition for writing instrument stored in the writing instrument body 10 to the porous body 38 which is the pen wick at the pen tip 30, providing the pen tip 30 with the holding body capable of visually recognising a drawing direction, having a porosity of the porous body which is the pen wick to 30 to 70%, wherein the ink composition for the writing instrument comprises coloured resin particles having a $D_{50}$ particle diameter of 1 to 10 $\mu$m and has an ink viscosity of 8 to 20 mPa·s, and using the characteristic of the coloured resin particles made to have a particle size distribution: Mv/Mn of 1 to 3. In particular, even if the ink composition is blended with the coloured resin particles having a large size exceeding 1 $\mu$m in terms of a $D_{50}$ particle diameter and the aggregation agent which is a component loosely aggregating a colourant, written lines having no intensity difference can be drawn.

Further, the effects of the present invention can be enhanced more in the writing instrument D by using the coloured resin particles of the $D_{50}$ particle diameter described above having preferably a 10% strength of 5 to 30 MPa measured by the micro compression test and the characteristics of a viscosity, a surface tension and pH in the respective predetermined scopes described above.

Also, in the writing instrument D of this type, the whole of the holding body 70 other than the ink guiding wick 45 is the visible part, and written characters are recognised through the holding body 70 at the pen tip 30, so that lines can be drawn just only at a portion desired to check without exceeding.

Further, in the writing instrument D, the friction body 60 is stuck to a rear end part of the rear barrel 11 of the writing instrument body 10, and the ink composition has a blend composition prepared by using the thermochromic coloured resin particles, so that thermochromic lines of handwritings or images can be drawn by the writing part 38 in such an embodiment as capable of surely thermally discolouring (decolour or change to a different colour) only portions desired to thermally discolour by the friction body 60 (by generating frictional heat by scratching action).

In particular, the ink can be efficiently fed to the porous part 38 which is the writing part without deviation by forming the ink guiding part 75 at an approximately central part of the holding body 70 in a longitudinal direction, so that the writing instrument which is usable until the ink is exhausted is provided. Also, the writing direction is easily determined by forming the ink guiding part 75 at an approximately central part of the holding body 70 in a longitudinal direction, and the writing instrument is provided with a shape of being easily writable. Further, the rib bodies 76, 76 are disposed at an upper part of the holding body 70, whereby when writing with a scale, linear lines can be drawn without staining the scale.

The writing instrument of the present invention shall not be restricted to the respective embodiments described above and can be changed to various configurations as long as the scope of the present invention is not varied.

In the writing instruments A to D described above, the barrel of the writing instrument body is formed with a circular barrel and an elliptical barrel, but the barrel may be a different shape such as a polygonal shape more than a triangle shape and a quadrangle shape.

In the respective embodiments described above, the pen wicks 35 and the porous body 38 are described in detail with respect to a sintered wick type, but in addition to the sintered wick, the pen wicks 35 and the porous body 38 may be, as described above, a fibre bundle wick, a fibre wick, a foamed body, a spongy body, a felt body and the like.

Further, in the respective embodiments described above, the writing instruments of a system (sliver type) of efficiently feeding the ink stored in the ink occlusion body 20 to the writing parts of the pen wicks 35 and the porous body 38 by a capillary force are shown, and the writing part may be constituted so as to be writing instruments provided with a valve mechanism, for example, a writing instrument in which an ink chamber storing a free ink in a barrel as a writing instrument body is disposed and in which a valve mechanism is disposed between the ink chamber and a writing wick to cause a valve rod to retreat against an energising force of a spring of the valve mechanism by pressing movement in a pen tip direction to release a valve part and derive the ink, followed by feeding the ink to the respective pen wicks having the physical properties described above.

Also, the writing instrument D is constituted so as to feed the ink by a single part from the ink occlusion body 20 to the porous body 38 as the writing part with the ink guiding wick 45, and the ink may be fed from the ink occlusion body 20 to the porous body 38 as the writing part by two parts, for example, two parts of a relay porous body from the ink occlusion body 20 up to a cylindrical part 73a and the same ink feeding wick as the ink guiding wick described above in the ink guiding part 75.

Examples

Next, the present invention shall be explained below in further details with reference to examples, but the present invention shall not be restricted to the following examples.

Examples 1 to 6 and Comparative Examples 1 to 3:

Ink compositions for a writing instrument containing coloured resin particles having blend compositions shown in the following Table 1 were prepared by an ordinaly method.

Thermochromic and photochromic coloured resin particles obtained by the following production examples were used as the coloured resin particles.

A $D_{50}$ particle diameter, a 10% strength, pH of the ink compositions, a viscosity/mPa·s, a particle size distribution: Mv/Mn, a surface tension/mN/m, a contact angle/° of the coloured resin particles obtained were measured by the following respective methods.

Measuring method of particle diameter:

A value of $D_{50}$ was measured by means of HRA9320-X100 manufactured by Nikkiso Co., Ltd.

Measuring method of 10% strength:

Calculated from the formula described above by means of MCT-510 manufactured by Shimazdu Corporation.

Measuring method of pH of the ink compositions:

The pH (25°C) was measured by means of a glass electrode manufactured by HORIBA, Ltd.

Measuring method of ink viscosity:

The viscosity (25°C) was measured by means of a cone plate type viscometer TV-2 manufactured by Tokimec, Inc. Measuring method of particle size distribution: Mv/Mn of the coloured resin particles:
Calculated from the formula described above by means of the distribution measuring device described above.

Measuring method of surface tension:

The surface tension (25°C) was measured by means of an automatic surface tension measuring meter DY-300 manufactured by Kyowa Interface Science Co., Ltd.

Measuring method of contact angle/°:

The contact angle/° was measured by means of a contact angle meter DM-500 manufactured by Kyowa Interface Science Co., Ltd

Production of thermochromic pigment A:

One part by mass (hereinafter referred to merely as part) of ETAC manufactured by Yamada Chemical Co., Ltd as a leuco dye, 2 parts of bisphenol A as a developer and 24 parts of myristyl myristate as a discolouration temperature regulator were heated and molten at 100°C to obtain 27 parts of a homogeneous composition.

As a capsule filming agent, 10 parts of isocyanate and 10 parts of polyol were added to and mixed under stirring with a homogeneous hot solution of 27 parts of the composition obtained above. Then, 60 parts of a 12% polyvinyl alcohol aqueous solution as protective colloid was added and emulsified at 25°C to prepare a dispersion. Then, 5 parts of 5% polyamine was used to treat the dispersion at 80°C for 60 minutes and obtain a core-shell type thermochromic pigment A (black in colouring and colourless in decolouring). The dispersion was cooled down to room temperature and then subjected to acid addition, filtration, washing with water, followed by drying the filtrated object by means of a spray dryer to thereby obtain a powdery thermochromic pigment which is a coloured resin particle. The thermochromic pigment presented a dense blue colour hue in colour developing and decoloured by heat (for example, 60°C or higher) such as frictional heat. The thermochromic pigment thus obtained had a $D_{50}$ diameter of 2.1 $\mu$m, a particle size distribution: Mv/Mn of 1.8 and a 10% strength of 7.2 MPa.

Production of thermochromic pigment B:

The stirring conditions in polymerisation of the particles described above were changed to obtain a thermochromic pigment B having a different $D_{50}$ diameter. The thermochromic pigment thus obtained had a $D_{50}$ diameter of 3.1 $\mu$m, a particle size distribution: Mv/Mn of 3.9 and a 10% strength of 6.4 MPa.

Production of thermochromic pigment C:

The stirring conditions in polymerisation of the particles described above were changed to obtain a thermochromic pigment C having a different $D_{50}$ diameter. The thermochromic pigment thus obtained had a $D_{50}$ diameter of 4.2 $\mu$m, a particle size distribution: Mv/Mn of 2.2 and a 10% strength of 6.8 MPa.

Production of photochromic pigment A:

As a photochromic dye, 3 parts of 1,3,3-Trimethylindolino-6'-(1-piperidinyl)spironaphsozazine, 10 parts of diethylene glycol dibenzoate and 10 parts of methyl ethyl ketone were heated and molten at 80°C to obtain 23 parts of a homogeneous composition.

As a capsule filming agent, 10 parts of isocyanate and 10 parts of polyol were added to and mixed with a homogeneous hot solution of 23 parts of the composition obtained above. Then, 60 parts of a 12% aqueous solution of polyvinyl alcohol as protective colloid was added and emulsified at 25°C to prepare a dispersion. Then, 5 parts of 5% polyamine was used to treat the dispersion at 80°C for 60 minutes and obtain a microcapsule.

The microcapsulated aqueous dispersion obtained by the procedure described above was subjected to spray drying to thereby turn the microcapsulated aqueous dispersion into a powdery form and obtain a photochromic pigment.

The photochromic pigment had a property in which the photochromic pigment was colourless under indoor illumination environment and coloured red under UV irradiation environment (solar light and black light (315 to 400 nm)). The photochromic pigment thus obtained had a $D_{50}$ diameter of 2.8 $\mu$m, a particle size distribution: Mv/Mn of 1.7 and a 10% strength of 8.9 MPa.

Production of photochromic pigment B:

The stirring conditions in polymerisation of the particles described above were changed to obtain a photochromic pigment B having a different $D_{50}$ diameter. The photochromic pigment thus obtained had a $D_{50}$ diameter of 3.4 $\mu$m, a particle size distribution: Mv/Mn of 3.5 and a 10% strength of 8.1 MPa.

Production of coloured urethane particle A:

As a prepolymer, 7.2 parts by mass of trimethylolpropane (1 mol) adduct of diphenylmethane diisocyanate (3 mol), D-109, manufactured by Mitsui Chemicals, Inc. was added to 2.8 parts by mass of a water-insoluble dye, Valifast Red 1355, manufactured by Orient Chemical Industries Co., Ltd. and 11.5 parts by mass of ethylene glycol monobenzyl ether as an organic solvent while heating at 60°C to prepare an oil phase solution. On the other hand, 15 parts by mass of polyvinyl alcohol, PVA-205, manufactured by Kuraray Co., Ltd. as a dispersant was dissolved in 200 parts by mass of distilled water while heating at 60°C to prepare an aqueous phase solution. The oil phase solution was added to the aqueous phase solution of 60°C, and the mixture was emulsified and mixed for 6 hours by means of a homogeniser to thereby complete polymerisation. The dispersion thus obtained was subjected to centrifugation to thereby obtain coloured urethane particles (red particles). The coloured urethane particles thus obtained had a $D_{50}$ diameter of 2.1 $\mu$m, a particle size distribution: Mv/Mn of 1.6 and a 10% strength of 18.4 MPa. Production of coloured urethane particle B:

The stirring conditions in polymerisation of the particles described above were changed to obtain a coloured urethane particle B having a different $D_{50}$ diameter. The photochromic pigment thus obtained had a $D_{50}$ diameter of 2.8 $\mu$m, a particle size distribution: Mv/Mn of 3.2 and a 10% strength of 14.7 MPa.

In the writing instruments prepared by using the respective ink compositions obtained above, the writing instrument A based on FIG. 1A to FIG. 1C and FIG. 2 and the writing instrument D based on FIG. 5A to FIG. 5C were used. Constitution of the writing instrument A based FIG. 1A to FIG. 1C and FIG. 2:

Constitution of pen wick 35:

A polyethylene (PE) having a $D_{50}$ diameter of 200 $\mu$m - made sintered wick, having a pore size of 50 $\mu$m, a porosity of 60%, a writing part 37: a width = 4 mm, a knife-cut shape, an ink guiding part: $\phi$ (t) 1.6 mm, a difference of an insertion length in an ink guiding part at end part: 3 mm, a width of a writing wick = 1.75 mm.

The pen wick 35 was dipped in an aqueous solution of a surfactant BT-9, polyoxyethylene alkyl ether, manufactured by Nikko Chemicals Co., Ltd and then dried and processed.

Constitution of holding body 40:

Made of an acryl resin, a visible light transmittance: 85% (measured by means of a multi-light spectral colourimeter MSC-5N, manufactured by Suga Instruments Co., Ltd and set it to a visible light transmittance)
Size of the visible part 41 (quadrangle) after fitting the pen wick: 5 mm × 6 mm × 3 mm × 4 mm Constitutions of writing instrument members other than the pen wick 35 and the holding body 40:
Ink occlusion body 20: PET fibre bundle, porosity: 85%, $\phi$6 × 77 mm

Writing instrument body, cap: made of polypropylene (PP) Occluding method of the ink composition in the ink occlusion body 20:

The ink composition was forcibly filled into the ink occlusion body 20 by using a syringe and was not occluded on both end faces of the ink occlusion body 20 in such a mode as shown in FIG. 1C (volume fraction: 80%). Constitution of friction body 60:
A friction body constituted by an olefin base elastomer was used.

Constitution of writing instrument D based on FIG. 5A to FIG. 5C:

Constitution of pen wick:

Writing part (porous body 38) : $D_{50}$ particle diameter 200 $\mu$m PE made sintered wick, pore size 50 $\mu$m, porosity 60%, upper side length 5 mm, lower side length 6 mm, height 3 mm, both sides of a front end face subjected to chamfering treatment

The porous body 38 was dipped in an aqueous solution of the surfactant BT-9 (polyoxyethylene alkyl ether, manufactured by Nikko Chemicals Co., Ltd.) and then dried and processed.

Holding body 70 (including a main body part): made of an ABS resin, a visible light transmittance: 85%

Ink guiding part 75: cylindrical shape, inner diameter: $\phi$ 1. 7 mm

Constitutions of writing instrument members other than the pen wick:
Ink guiding wick 45: PET fibre bundle, porosity: 65%, $\phi$ 1.5 mm × 35 mm

Ink occlusion body 20: PET fibre bundle, porosity: 85%, $\phi$ 15 mm × 55 mm

For adhesion of the porous body 38 and holding body 70, the porous body 38 was adhered to the holding body 70 by impregnating a gap therebetween from a chamfering part side with an organic solvent (ethyl acetate) and drying it in a state of fitting the porous body 38 and the holding body 70 together.

Occluding method of the ink composition in the ink occlusion body 20:

The ink composition was forcibly filled into the ink occlusion body 20 by using a syringe and was not occluded on both end faces of the ink occlusion body 20 in such a mode as shown in FIG. 1C (volume fraction: 80%).

Constitution of friction body 60:

A friction body constituted by an olefin elastomer was used.

The respective ink compositions shown in the following Table 1 were occluded in the writing instruments A and D obtained above to evaluate an intensity difference of the drawn lines according to the following evaluation method.

Evaluation method of intensity difference of drawn lines:

Linear lines of about 20 cm were written on a commercially available PPC paper to evaluate intensities at a central part and an outside of the drawn lines in a portion from writing start up to 20 cm according to the following evaluation criteria. The results thereof are shown in the following Table 1.

Evaluation criteria:

A: no intensity difference observed
B: slight intensity difference observed
C: significant intensity difference observed

The respective ink compositions shown in the following Table 1 were occluded in the writing instrument A obtained above to evaluate colour separation according to the following evaluation method.

Evaluation method of colour separation:

The writing instrument described above was left on an environment of 50°C and 65% RH for a month in a sideways state, and then the writing instrument was used for writing to evaluate an intensity difference in the drawn lines before and after occluded according to the following evaluation criteria.

Evaluation criteria:

A: no intensity difference observed
B: slight intensity difference observed
C: a little instensity difference observed
D: significant intensity difference observed

Table 1

Total: 100% by mass

| | | | Example | | | | | |
|---|---|---|---|---|---|---|---|---|
| | | | 1 | 2 | 3 | 4 | 5 | 6 |
| Coloured resin particle | Thermochromic pigment A *1 | | 15 | | | | | |
| | Thermochromic pigment B *2 | | | | | | | |
| | Thermochromic pigment C *3 | | | | | 15 | | |
| | Photochromic pigment A *4 | | | 15 | | | 15 | |
| | Photochromic pigment B *5 | | | | | | | |
| | Coloured urethane particle A *6 | | | | 15 | | | 15 |
| | Coloured urethane particle B *7 | | | | | | | |
| Aggregating agent | Hydroxyethyl cellulose *8 | | 0.4 | 0.2 | 0.4 | 0.3 | | |
| | Hydroxypropylmethyl cellulose *9 | | | | | | 0.7 | |
| Preservative | 1,2-Benzoisothiazollin-3-one | | 0.1 | 0.1 | 0.1 | 0.1 | 0.1 | 0.1 |
| Water soluble organic solvent | Glycerol | | 10 | 10 | 10 | 10 | 10 | 10 |
| Water | Purified water | | 74.5 | 74.9 | 74.9 | 74.9 | 74.9 | 74.9 |
| Ink pH | | | 6.4 | 6.1 | 5.5 | 6.6 | 6.0 | 5.3 |
| Ink viscosity /mPa·s | | | 16.4 | 10.5 | 17.1 | 12.4 | 17.1 | 8.3 |
| Particle size distribution: Mv/Mn | | | 1.8 | 1.7 | 1.6 | 2.2 | 1.7 | 1.6 |
| Surface tension /mN/m | | | 38.5 | 37.8 | 37.7 | 36.5 | 37.6 | 38.1 |
| Contact angle/° | | | 31 | 32 | 31 | 31 | 32 | 32 |
| Evaluation | Difference of intensity for drawn line by writing instrument A | | A | A | A | B | A | A |
| | Difference of intensity for drawn line by writing instrument D | | A | A | A | B | A | A |
| | Colour separation by writing instrument A | | A | A | A | A | B | C |

Table 1 continued

| | | | Total: 100% by mass | | |
| --- | --- | --- | --- | --- | --- |
| | | | Comparative Example | | |
| | | | 1 | 2 | 3 |
| Coloured resin particle | | Thermochromic pigment A | | | |
| | | Thermochromic pigment B | 15 | | |
| | | Thermochromic pigment C | | | |
| | | Photochromic pigment A | | | |
| | | Photochromic pigment B | | 15 | |
| | | Coloured urethane particle A | | | |
| | | Coloured urethane particle B | | | 15 |
| Aggregating agent | Hydroxyethyl cellulose | | 0.4 | 0.2 | 0.4 |
| | Hydroxypropylmethyl cellulose | | | | |
| Preservative | 1,2-Benzoisothiazollin-3-one | | 0.1 | 0.1 | 0.1 |
| Water soluble organic solvent | Glycerol | | 10 | 10 | 10 |
| Water | Purified water | | 74.9 | 74.9 | 74.9 |
| Ink pH | | | 6.2 | 6.3 | 5.6 |
| Ink viscosity /mPa·s | | | 17.1 | 11.3 | 17.5 |
| Particle size distribution: Mv/Mn | | | 3.9 | 3.5 | 3.2 |
| Surface tension /mN/m | | | 36.7 | 37.3 | 37.1 |
| Contact angle/° | | | 31 | 31 | 31 |
| Evaluation | Difference of intensity for drawn line by writing instrument A | | C | C | C |
| | Difference of intensity for drawn line by writing instrument D | | C | C | C |
| | Colour separation by writing instrument A | | A | A | A |

Terms *1 to *9 shown in Table 1 described above show the followings.

*1: $D_{50}$ particle diameter 2.1 μm, 10% strength: 7.2 MPa

*2: $D_{50}$ particle diameter 3.1 μm, 10% strength: 6.4 MPa

*3: $D_{50}$ particle diameter 4.2 μm, 10% strength: 6.8 MPa

*4: $D_{50}$ particle diameter 2.8 μm, 10% strength: 8.9 MPa

```
*5: D₅₀ particle diameter 3.4 μm, 10% strength: 8.1 MPa

*6: D₅₀ particle diameter 2.1 μm, 10% strength: 18.4 MPa

*7: D₅₀ particle diameter 2.8 μm, 10% strength: 14.7 MPa

*8: manufactured by FUJIFILM Wako Pure Chemical Corporation,

2% by mass aqueous solution concentration: 100 to 300 MPa·s

*9: Metolose 60SH-50, manufactured by Shin-Etsu Chemical

Co., Ltd., 2% by mass aqueous solution concentration: 50

MPa·s
```

As apparent from the results summarized in Table 1 described above, it became confirmed that the writing instruments prepared in Examples 1 to 6 in the scope of the present invention could draw lines having no intensity difference without unevenly feeding the ink to the pen wick as compared with the writing instruments prepared in Comparative Examples 1 to 3 out of the scope of the present invention. In particular, it could be confirmed that lines having no intensity difference could be drawn assuming that the ink composition used in Example 4 was blended with the coloured resin particles having such a large size as 4.2 $\mu$m in terms of a $D_{50}$ particle diameter and that the aggregation agents loosely aggregating the colourants used in Examples 1 to 5 were added.

Industrial Applicability

The pen tip of the present invention can be applied to a writing instrument of a so-called marking pen type called a underline pen.

**Claims**

1. A writing instrument **characterised by** feeding an ink composition for a writing instrument stored in a writing instrument body to a pen wick at a pen tip, providing the pen tip with a visible part capable of visually recognising a writing direction, having a porosity of the pen wick to 30 to 70%, wherein the ink composition for the writing instrument comprises coloured resin particles having a $D_{50}$ particle diameter of 1 to 10 $\mu$m and has an ink viscosity of 8 to 20 mPa·s, and the coloured resin particles have a particle size distribution: Mv/Mn of 1 to 3.

2. The writing instrument as described in claim 1, wherein the ink composition for the writing instrument has a surface tension of 30 to 60 mN/m.

3. The writing instrument as described in claim 1 or 2, wherein a contact angle of the ink composition for the writing instrument to a polyethylene terephthalate-made film is 10 to 70°.

Amended claims in accordance with Rule 137(2) EPC.

1. A writing instrument (A; B; C; D) **characterised by** feeding an ink composition for a writing instrument stored in a writing instrument body (10) to a pen wick (35) at a pen tip (30), providing the pen tip (30) with a visible part (41) capable of visually recognising a writing direction, having a porosity of the pen wick (35) to 30 to 70%, wherein the ink composition for the writing instrument comprises coloured resin particles having a $D_{50}$ particle diameter of 1 to 10 $\mu$m and has an ink viscosity of 8 to 20 mPa·s, and the coloured resin particles have a particle size distribution: Mv/Mn of 1 to 3.

2. The writing instrument (A; B; C; D) as described in claim 1, wherein the ink composition for the writing instrument has a surface tension of 30 to 60 mN/m.

3. The writing instrument (A; B; C; D) as described in claim 1 or 2, wherein a contact angle of the ink composition for the writing instrument to a polyethylene terephthalate-made film is 10 to 70°.

*Fig. 1A*    *Fig. 1B*    *Fig. 1C*

*Fig. 2*

*Fig. 3A*        *Fig. 3B*        *Fig. 3C*

*Fig. 4A*          *Fig. 4B*          *Fig. 4C*

**Fig. 5A**

**Fig. 5B**

| | Europäisches Patentamt |
|---|---|
| | European Patent Office |
| | Office européen des brevets |

# EUROPEAN SEARCH REPORT

Application Number

EP 20 15 5720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/193454 A1 (SUZUKI HITOSHI [JP] ET AL) 27 June 2019 (2019-06-27) * page 14, paragraph 197 - page 16, paragraph 227; figures 21-24 * ----- | 1 | INV. B43K1/00 C09D11/00 B43K8/06 |
| X | JP 2017 122168 A (MITSUBISHI PENCIL CO) 13 July 2017 (2017-07-13) * paragraph [0023] - paragraph [0030] * ----- | 1-3 | |

| | TECHNICAL FIELDS SEARCHED (IPC) |
|---|---|
| | B43K C09D |

The present search report has been drawn up for all claims

| Place of search | Date of completion of the search | Examiner |
|---|---|---|
| Munich | 27 August 2020 | Kelliher, Cormac |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 20 15 5720

The Search Division considers that the present European patent application does not comply with the requirements of unity of invention and relates to several inventions or groups of inventions, namely:

```
1. claim: 1(partially)

     Seeks to provide a writing instrument.
                      ---

2. claims: 2, 3(completely); 1(partially)

     Seek to provide an ink.
                      ---
```

## ANNEX TO THE EUROPEAN SEARCH REPORT
## ON EUROPEAN PATENT APPLICATION NO.

EP 20 15 5720

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2020

| Patent document cited in search report | | Publication date | Patent family member(s) | | Publication date |
|---|---|---|---|---|---|
| US 2019193454 | A1 | 27-06-2019 | CN 109863039 | A | 07-06-2019 |
| | | | EP 3505363 | A1 | 03-07-2019 |
| | | | JP 2018034508 | A | 08-03-2018 |
| | | | KR 20190039592 | A | 12-04-2019 |
| | | | SG 11201901537R | A | 28-03-2019 |
| | | | US 2019193454 | A1 | 27-06-2019 |
| | | | WO 2018038199 | A1 | 01-03-2018 |
| JP 2017122168 | A | 13-07-2017 | JP 6602206 | B2 | 06-11-2019 |
| | | | JP 2017122168 | A | 13-07-2017 |

EPO FORM P0459

For more details about this annex : see Official Journal of the European Patent Office, No. 12/82

**REFERENCES CITED IN THE DESCRIPTION**

**Patent documents cited in the description**

- JP 2000052682 A

- JP 2012020575 A